# EUROPEAN PATENT APPLICATION

(11) **EP 2 455 706 A1**
(43) Date of publication of application: **23.05.2012**
(21) Application number: 11189436.6
(22) Date of filing: 16.11.2011
(51) Int. Cl.: G01B 7/02, G01B 15/00

(54) **Sensor assembly and methods of measuring a proximity of a machine component to a sensor**

(30) Priority: 22.11.2010 US 951415
(71) Applicant: General Electric Company, Schenectady, NY 12345 (US)
(72) Inventor: Jensen, Raymond, Minden, NV Nevada 89423 (US); Sheikman, Boris Leonid, Minden, NV Nevada 89423 (US)
(74) Representative: Bedford, Grant Richard

(57) **Abstract**

A sensor assembly (110) for use in monitoring a machine component (104) includes a signal processing device (200) and at least one probe (202). The at least one probe includes an emitter (206) configured to generate an electromagnetic field from at least one microwave signal, wherein the emitter is detuned when a machine component is positioned within the electromagnetic field such that a loading signal is generated. The at least one probe also includes a transmitter (210) coupled to the emitter and configured to wirelessly transmit the loading signal to the signal processing device.

## Description

The present application relates generally to power systems and, more particularly, to a sensor assembly and methods of measuring the proximity of a machine component relative to a sensor.

Known machines may exhibit vibrations and/or other abnormal behavior during operation. One or more sensors may be used to measure and/or monitor such behavior and to determine, for example, an amount of vibration exhibited in a machine drive shaft, a rotational speed of the machine drive shaft, and/or any other operational characteristic of an operating machine or motor. Often, such sensors are coupled to a machine monitoring system that includes a plurality of monitors. The monitoring system receives signals from one or more sensors, performs at least one processing step on the signals, and transmits the modified signals to a diagnostic platform that displays the measurements to a user.

At least some known machines use eddy current sensors to measure the vibrations in and/or a relative position of a machine component. However, the use of known eddy current sensors may be limited because a detection range of such sensors is only about half of a width of the eddy current sensing element. Other known machines use optical sensors to measure a vibration and/or a position of a machine component. However, known optical sensors may become fouled by contaminants and provide inaccurate measurements, and as such, may be unsuitable for industrial environments. Moreover, known optical sensors may not be suitable for detecting a vibration and/or a position of a machine component through a liquid medium and/or a medium that includes particulates.

Moreover, at least some known proximity sensors include a probe head and a signal processor. Known probe heads include an antenna that generates one or more signals and that receives one or more reflected signals from an object that is close in proximity to the antenna. The probe head transmits the reflected signals to the signal processor for processing and/or for use in calculating a proximity measurement. Such signals are typically transmitted via a data cable that extends between the probe head and the signal processor. However, depending on the distance between the probe head and the signal processor, the signals transmitted between the probe head and the signal processor may become attenuated in amplitude and/or power as a result of an impedance of the data cable. Such attenuation may cause the signal processor to generate inaccurate proximity measurements. As such, the use of known proximity sensors may be limited.

In one embodiment according to the present invention, a sensor assembly for use in monitoring a machine component is provided that includes a signal processing device and at least one probe. The at least one probe includes an emitter configured to generate an electromagnetic field from at least one microwave signal, wherein the emitter is detuned when a machine component is positioned within the electromagnetic field such that a loading signal is generated. The at least one probe also includes a transmitter coupled to the emitter and configured to wirelessly transmit the loading signal to the signal processing device.

In another embodiment, a power system is provided that includes a machine including at least one component and a sensor assembly positioned proximate to the at least one component. The sensor assembly includes a signal processing device and at least one probe. The at least one probe includes an emitter configured to generate an electromagnetic field from at least one microwave signal, wherein the emitter is detuned when a machine component is positioned within the electromagnetic field such that a loading signal is generated. The at least one probe also includes a transmitter coupled to the emitter and configured to wirelessly transmit the loading signal to the signal processing device.

In yet another embodiment, a method for measuring a proximity of a machine component is provided. The method includes generating an electromagnetic field from at least one microwave signal and generating a loading signal representative of a disruption of the electromagnetic field. The loading signal is wirelessly transmitted to a signal processing device, and a proximity of the at least one machine component is calculated based on the loading signal received.

Various aspects and embodiments of the present invention will now be described in connection with the accompanying drawings, in which:
Fig. 1 is a block diagram of an exemplary power system.
Fig. 2 is a block diagram of an exemplary sensor assembly that may be used with the power system shown in Fig. 1.
Fig. 3 is a block diagram of an alternative sensor assembly that may be used with the power system shown in Fig. 1.
Fig. 4 is a block diagram of another alternative sensor assembly that may be used with the power system shown in Fig. 1.

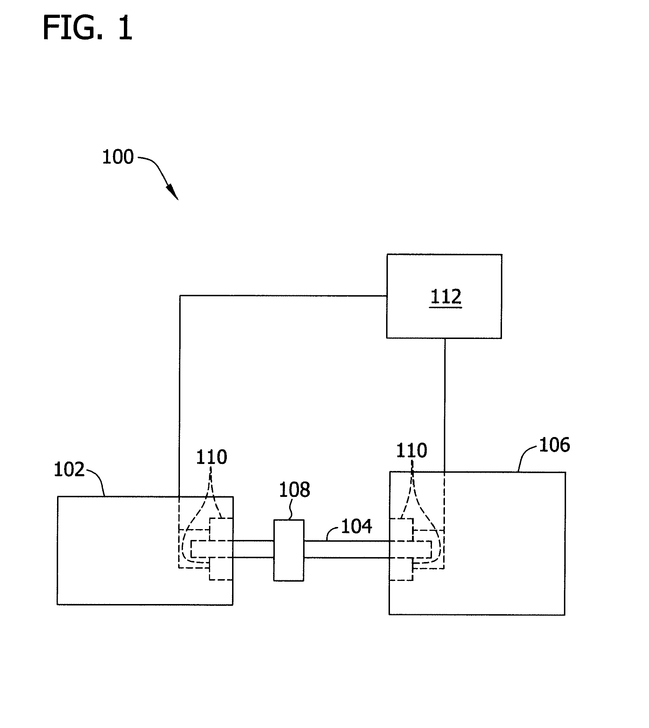

Fig. 1 shows an exemplary power system 100 that includes a machine 102. In the exemplary embodiment, machine 102 may be, but is not limited to only being, a wind turbine, a hydroelectric turbine, a gas turbine, or a compressor. Alternatively, machine 102 may be any other machine used in a power system. In the exemplary embodiment, machine 102 rotates a drive shaft 104 that is coupled to a load 106, such as a generator.

In the exemplary embodiment, drive shaft 104 is at least partially supported by one or more bearings (not shown) housed within machine 102 and/or within load 106. Alternatively or additionally, the bearings may be housed within a separate support structure 108, such as a gearbox, or within any suitable structure or component that enables power system 100 to function as described herein.

In the exemplary embodiment, power system 100 includes at least one sensor assembly 110 that measures and/or monitors at least one operating condition of machine 102, of drive shaft 104, of load 106, and/or of any other component of power system 100 that enables system 100 to function as described herein. More specifically, in the exemplary embodiment, sensor assembly 110 is a proximity sensor assembly 110 that is positioned in close proximity to drive shaft 104 for measuring and/or monitoring a distance (not shown in Fig. 1) defined between drive shaft 104 and sensor assembly 110. Moreover, in the exemplary embodiment, sensor assembly 110 uses microwave signals to measure a proximity of a component of power system 100 with respect to sensor assembly 110. As used herein, the term "microwave" refers to a signal or a component that receives and/or transmits signals having one or more frequencies between about 300 Megahertz (MHz) and about 300 Gigahertz (GHz). Alternatively, sensor assembly 110 may measure and/or monitor any other component of power system 100, and/or may be any other sensor or transducer assembly that enables power system 100 to function as described herein. In the exemplary embodiment, each sensor assembly 110 is positioned in any location within power system 100. Moreover, in the exemplary embodiment, at least one sensor assembly 110 is coupled to a diagnostic system 112 for use in processing and/or analyzing one or more signals generated by sensor assemblies 110.

During operation, in the exemplary embodiment, the operation of machine 102 may cause one or more components of power system 100, such as drive shaft 104, to change position with respect to at least one sensor assembly 110. For example, vibrations may be induced to the components and/or the components may expand or contract as the operating temperature within power system 100 changes. In the exemplary embodiment, sensor assemblies 110 measure and/or monitor the proximity the position, and/or the amount of vibration of the components relative to each sensor assembly 110 and transmit a signal representative of the measured proximity, position, and/or amount of vibration of the components (hereinafter referred to as a "proximity measurement signal") to diagnostic system 112 for processing and/or analysis.

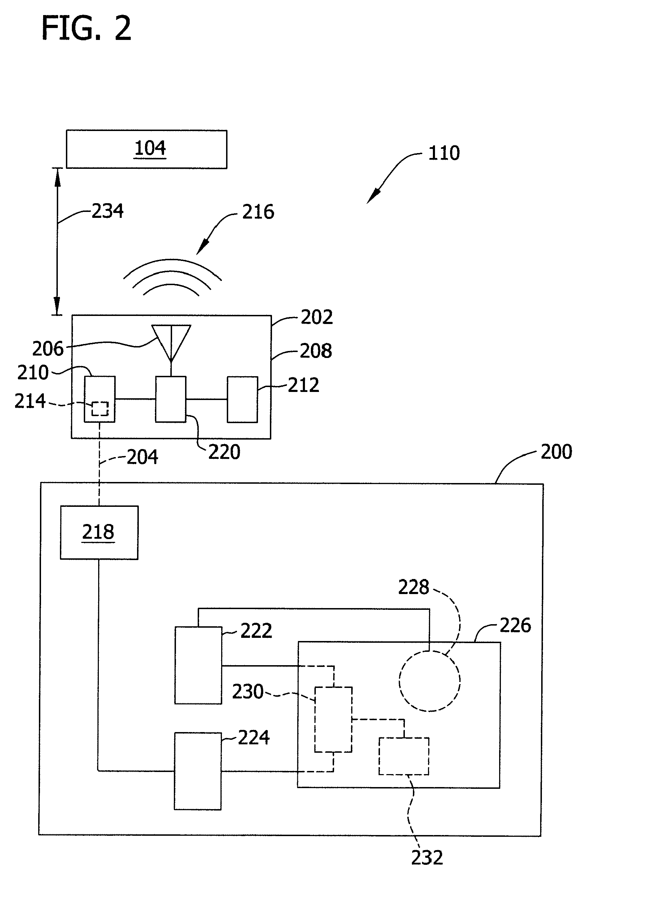

Fig. 2 is a schematic diagram of an exemplary sensor assembly 110 that may be used with power system 100 (shown in Fig. 1). In the exemplary embodiment, sensor assembly 110 includes a signal processing device 200 and a probe 202 that communicates with signal processing device 200 via a data connection 204. In the exemplary embodiment, data connection 204 is a wireless data connection 204 that enables probe 202 to communicate wirelessly with signal processing device 200.

Moreover, in the exemplary embodiment, probe 202 includes an emitter 206 that is coupled to and/or positioned within a probe housing 208. More specifically, in the exemplary embodiment, probe 202 is a microwave probe 202 that includes a microwave emitter 206. As such, in the exemplary embodiment, emitter 206 has a resonant frequency that is within a microwave frequency range.

Moreover, in the exemplary embodiment, probe 202 includes a transmitter 210 and a signal generator 212 that are integrated within probe housing 208 and/or that are positioned within probe housing 208. Alternatively, transmitter 210 and/or signal generator 212 may be positioned within any other housing or structure (not shown) coupled to probe housing 208. Transmitter 210, signal generator 212, and/or any other component of probe 202 may receive power from a battery (not shown), from a power conduit (not shown), and/or from any other power source that enables sensor assembly 110 to function as described herein. In the exemplary embodiment, transmitter 210 is a wireless transmitter 210 that transmits data to signal processing device 200 via data connection 204. More specifically, in the exemplary embodiment, transmitter 210 transmits data to signal processing device 200 via any wireless protocol and/or transport mechanism. Such wireless protocols and/or transport mechanisms may include, but are not limited to only including, wireless Ethernet, ZigBee, Bluetooth, infrared communication, microwave communication, and/or any other radio frequency or wireless communication protocol and/or medium.

Moreover, in the exemplary embodiment, transmitter 210 includes a memory 214 for use in storing signal data. For example, memory 214 may include, but is not limited to only including, random access memory (RAM), flash memory, and/or any other storage circuit and/or device that enables sensor assembly 110 to function as described herein. In the exemplary embodiment, memory 214 receives signals from emitter 206 and stores data representative of the signals for transmission to signal processing device 200. More specifically, in the exemplary embodiment, memory 214 buffers the data if a communication link, such as data connection 204, is interrupted. When data connection 204 is restored, transmitter 210 retrieves data from memory 214 and transmits the data to signal processing device 200. As such, memory 214 and transmitter 210 facilitate preventing a loss of data from emitter 206 during an interruption of data connection 204.

In the exemplary embodiment, signal generator 212 is an oscillator that generates at least one electrical signal having a microwave frequency (hereinafter referred to as a "microwave signal") that is equal or approximately equal to the resonant frequency of emitter 206. Alternatively, signal generator 212 may be any circuit and/or device that generates a microwave signal. Signal generator 212 transmits the microwave signal to emitter 206 for use in generating an electromagnetic field 216.

In the exemplary embodiment, a receiver 218 is integrated within and/or positioned within signal processing device 200. Receiver 218, in the exemplary embodiment, is communicatively coupled to transmitter 210. More specifically, in the exemplary embodiment, receiver 218 is a wireless receiver 218 that receives data from transmitter 210 via data connection 204.

Moreover, in the exemplary embodiment, probe 202 includes a directional coupling device 220 that is integrated within probe housing 208. More specifically, directional coupling device 220 is coupled to antenna 206, transmitter 210, and signal generator 212. In the exemplary embodiment, signal generator 212 transmits the microwave signal to emitter 206 via directional coupling device 220, and directional coupling device 220 transmits a reflection of the microwave signal to transmitter 210, as described more fully herein. Transmitter 210 transmits the reflected microwave signal, or data representative of the reflected microwave signal, to receiver 218. In an alternative embodiment, directional coupling device 220 is positioned within signal processing device 200. In such an embodiment, the reflected microwave signal may be transmitted to receiver 218 and receiver 218 transmits the reflected microwave signal to directional coupling device 220.

In the exemplary embodiment, receiver 218 receives data representative of the reflected microwave signal from transmitter 210. Moreover, in the exemplary embodiment, receiver 218 reproduces the reflected microwave signal from the data, and transmits the reflected microwave signal to a reception power detector 224. Alternatively, receiver 218 transmits one or more signals representative of one or more characteristics of the reflected microwave signal to reception power detector 224, such as an amount of power contained in the reflected microwave signal, a frequency of the reflected microwave signal, an amplitude of the reflected microwave signal, and/or any other characteristic of the reflected microwave signal.

Signal processing device 200, in the exemplary embodiment, also includes a transmission power detector 222 and a signal conditioning device 226. In the exemplary embodiment, signal conditioning device 226 includes a signal reference 228, a subtractor 230, and a linearizer 232. Transmission power detector 222 is coupled to signal reference 228 and to subtractor 230. Moreover, subtractor 230 is coupled to reception power detector 224 and to linearizer 232.

During operation, in the exemplary embodiment, signal generator 212 generates at least one microwave signal and transmits the microwave signal to emitter 206. As the microwave signal is transmitted through emitter 206, an electromagnetic field 216 is emitted from emitter 206 and out of probe housing 208. If an object, such as a drive shaft 104 or another component of machine 102 (shown in Fig. 1) and/or of power system 100 enters and/or changes a relative position within electromagnetic field 216, an electromagnetic coupling may occur between the object and field 216. More specifically, because of the presence of the object and/or because of such object movement, electromagnetic field 216 may be disrupted, for example, because of an induction and/or capacitive effect induced within the object that may cause at least a portion of electromagnetic field 216 to be inductively and/or capacitively coupled to the component as an electrical current and/or charge. In such an instance, emitter 206 is detuned (i.e., a resonant frequency of emitter 206 is reduced and/or changed) and a loading is induced to emitter 206. The loading induced to emitter 206 causes a reflection of the microwave signal (hereinafter referred to as a "detuned loading signal"), and/or data representative of the detuned loading signal, to be transmitted to receiver 218 via directional coupling device 220, transmitter 210, and data connection 204. In the exemplary embodiment, the detuned loading signal has a lower power amplitude and/or a different phase than the power amplitude and/or the phase of the microwave signal. Moreover, in the exemplary embodiment, the power amplitude of the detuned loading signal is dependent upon the proximity of the object to emitter 206. As such, in the exemplary embodiment, transmitter 210 transmits the detuned loading signal and/or data representative of the detuned loading signal to receiver 218 before a proximity measurement is calculated. Accordingly, probe 202 and/or probe housing 208 includes only minimal components that enable probe 202 and/or probe housing 208 to be sized smaller as compared to a probe that includes additional signal processing components.

Receiver 218, in the exemplary embodiment, transmits the detuned loading signal, or data representative of the detuned loading signal, to reception power detector 224. In the exemplary embodiment, reception power detector 224 determines an amount of power based on and/or contained within the detuned loading signal and transmits a signal representative of the determined detuned loading signal power to signal conditioning device 226.

In the exemplary embodiment, signal reference 228 transmits a microwave signal (hereinafter referred to as a "reference signal") that is substantially similar to the microwave signal generated by signal generator 212 to transmission power detector 222. More specifically, in the exemplary embodiment, signal reference 228 transmits a reference signal that has one or more characteristics, such as a frequency, an amplitude, an amount of power, and/or any other characteristic, that is substantially equal to one or more characteristics of the microwave signal generated by signal generator 212. Transmission power detector 222 determines an amount of power based on and/or contained within the reference signal and transmits a signal representative of the reference signal power to signal conditioning device 226. In the exemplary embodiment, subtractor 230 receives the reference signal power and the detuned loading signal power, and calculates a difference between the reference signal power and the detuned loading signal power. Subtractor 230 transmits a signal representative of the calculated difference (hereinafter referred to as a "power difference signal") to linearizer 232. In the exemplary embodiment, an amplitude of the power difference signal is proportional, such as inversely and/or exponentially proportional, to a distance 234 defined between the object within electromagnetic field 216 and probe 202 (i.e., distance 234 is known as the object proximity). Depending on the characteristics of emitter 206, such as, for example, the geometry of emitter 206, the amplitude of the power difference signal may at least partially exhibit a non-linear relationship with respect to the object proximity.

In the exemplary embodiment, linearizer 232 transforms the power difference signal into a voltage output signal (i.e., the "proximity measurement signal") that exhibits a substantially linear relationship between the object proximity and the amplitude of the proximity measurement signal. Moreover, in the exemplary embodiment, linearizer 232 transmits the proximity measurement signal to diagnostic system 112 (shown in Fig. 1) with a scale factor that is suitable for processing and/or analysis within diagnostic system 112. In the exemplary embodiment, the proximity measurement signal has a scale factor of volts per millimeter. Alternatively, the proximity measurement signal may have any other scale factor that enables diagnostic system 112 and/or power system 100 to function as described herein.

In an alternative embodiment, signal processing device 200 does not include transmission power detector 222. Rather, in such an embodiment, signal reference 228 stores data representative of an amount of power contained within the microwave signal generated by signal generator 212. In such an embodiment, signal reference 228 transmits the determined microwave signal power data directly to subtractor 230, and subtractor 230 compares the microwave signal power data to the detuned loading signal power data to calculate the power difference signal. The power difference signal is transmitted to linearizer 232 as described above.

In another embodiment, transmission power detector 222 and/or reception power detector 224 may be positioned within probe 202 instead of within signal processing device 200. In such an embodiment, signal reference 228 is omitted and transmission power detector 222 transmits data representative of the power contained in the microwave signal (received from signal generator 212 and/or directional coupling device 220) to receiver 218 via transmitter 210. Moreover, reception power detector 224 transmits data representative of the power contained in the detuned loading signal to receiver 218 via transmitter 210. The microwave signal power data and the detuned loading signal power data are compared by subtractor 230 and the power difference signal is transmitted to linearizer 232 as described above. Alternatively, subtractor 230 may also be positioned within probe 202 and signal reference 228 may be omitted such that only receiver 218 and linearizer 232 are positioned within signal processing device 200.

Moreover, in one embodiment, probe 202 and/or signal processing device may include a power management system (not shown) that de-energizes one or more components within probe 202 and/or signal processing device, for example, after a predetermined period of inactivity or after a first predetermined period of time has elapsed. The first predetermined period of time may be about 1 second, about 1 minute, or any other period of time that enables probe 202 and/or signal processing device 200 to measure the proximity, the position, and/or the amount of vibration of an object relative to emitter 206 and/or probe 202. In such an embodiment, the power management system may energize the components of probe 202 and/or signal processing device, for example, after a second predetermined period of time has elapsed and/or upon the occurrence of another event, such as a user-initiated wake-up event. The second predetermined period of time may be about 1 hour, about 15 minutes, about 1 minute, about 30 seconds, or any other period of time that enables probe 202 and/or signal processing device 200 to function as described herein.

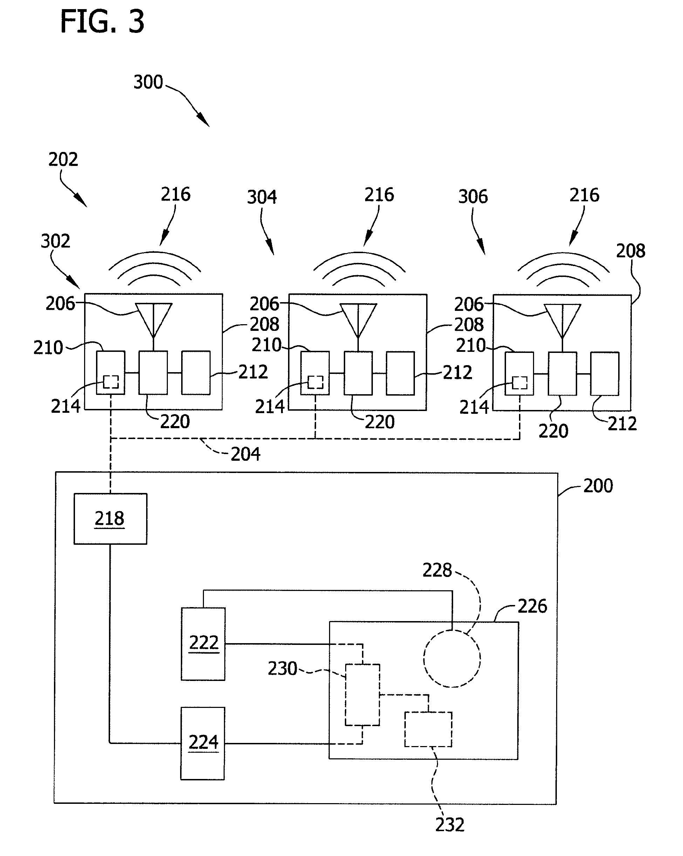

Fig. 3 is a block diagram of an alternative sensor assembly 300 that may be used with power system 100 (shown in Fig. 1). Sensor assembly 300 is substantially similar to sensor assembly 110 (shown in Fig. 2), and identical components are labeled with the same reference numerals in Fig. 3 as were used in Fig. 2. In the exemplary embodiment, sensor assembly 300 includes a plurality of probes 202, such as a first probe 302, a second probe 304, and a third probe 306. Although three probes 202 are illustrated in Fig. 3, it should be recognized that any number of probes 202 may be included in sensor assembly 300.

In the exemplary embodiment, each probe 202 is coupled to signal processing device 200, and more specifically, to receiver 218, via data connection 204. Alternatively, each probe 202 may be coupled to a separate signal processing device 200 via a separate data connection 204. Moreover, in the exemplary embodiment, signal generator 212 of each probe 202 generates a microwave signal that is substantially similar to the microwave signal of the other probes 202. More specifically, in the exemplary embodiment, each probe signal generator 212 generates a microwave signal that has one or more characteristics, such as a frequency, an amplitude, an amount of power, and/or any other characteristic, that is approximately equal to one or more characteristics of the microwave signal generated by signal generator 212 of every other probe 202. As such, receiver 218 and signal reference 228 may be tuned to a single frequency and/or to a microwave signal such that a single signal processing device 200 may calculate a proximity of one or more objects using the plurality of probes 202.

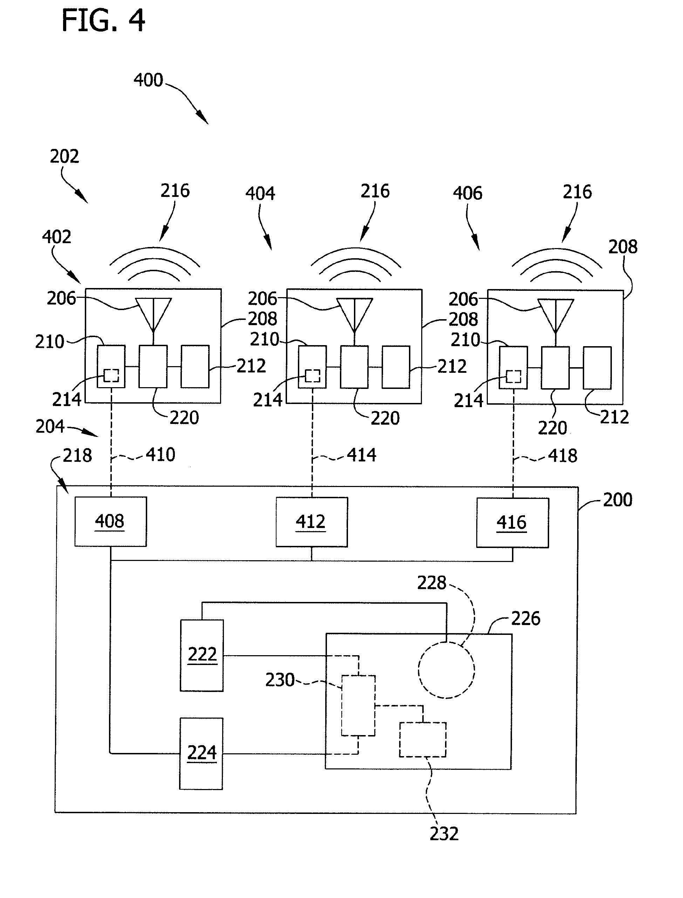

Fig. 4 is a block diagram of another alternative sensor assembly 400 that may be used with power system 100 (shown in Fig. 1). Sensor assembly 400 is substantially similar to sensor assembly 110 (shown in Fig. 2), and identical components are labeled with the same reference numerals in Fig. 4 as were used in Fig. 2. In the exemplary embodiment, sensor assembly 400 includes a plurality of probes 202, such as a first probe 402, a second probe 404, and a third probe 406. Although three probes 202 are illustrated in Fig. 4, it should be recognized that any number of probes 202 may be included in sensor assembly 400. Moreover, while a single transmission power detector 222, reception power detector 224, signal conditioning device 226, signal reference 228, subtractor 230, and linearizer 232 are illustrated in Fig. 4, it should be recognized that any number of transmission power detectors 222, reception power detectors 224, signal conditioning devices 226, signal references 228, subtractors 230, and/or linearizers 232 may be included in signal processing device 200. As such, a separate signal processing path may be provided for each probe 202, for example, by providing a separate transmission power detector 222, reception power detector 224, signal conditioning device 226, signal reference 228, subtractor 230, and/or linearizer 232 for each probe 202.

In the exemplary embodiment, signal processing device 200 includes a plurality of receivers 218. More specifically, in the exemplary embodiment, each probe 202 is coupled to a respective receiver 218 via a respective data connection 204. For example, first probe 402 is coupled to a first receiver 408 via a first data connection 410, second probe 404 is coupled to a second receiver 412 via a second data connection 414, and third probe 406 is coupled to a third receiver 416 via a third data connection 418. Moreover, in the exemplary embodiment, signal generator 212 of at least one probe 202 generates a microwave signal that is substantially different from the microwave signal of at least one other probe 202. More specifically, in the exemplary embodiment, signal generator 212 of at least one probe 202 generates a microwave signal that has one or more characteristics, such as a frequency, an amplitude, an amount of power, and/or any other characteristic, that is substantially different from one or more characteristics of the microwave signal generated by signal generator 212 of at least one other probe 202. In one embodiment, signal generator 212 of each probe 202 generates a microwave signal that is substantially different from the microwave signal generated by signal generator 212 of every other probe 202. Moreover, in the exemplary embodiment, the detuned loading signal generated within each probe 202 has a substantially similar frequency and/or other characteristics as the microwave signal transmitted to emitter 206 of each probe 202, although a phase shift may occur such that the detuned loading signal may have a different phase than the microwave signal. As such, in the exemplary embodiment, each probe 202 transmits to signal processing device 200 a detuned loading signal that is substantially different from the detuned loading signal of one or more probes 202.

Each receiver 218 is tuned to a frequency of the microwave signal and/or a frequency of the detuned loading signal generated by a respective probe 202 that is coupled to receiver 218 such that each receiver 218 is enabled to receive the detuned loading signal generated by the respective probe 202. Moreover, signal reference 228 provides a reference signal and/or data that is substantially similar to the microwave signal generated within each probe 202. Alternatively, a separate signal reference 228 is included within signal conditioning device 226 for each probe 202 such that each signal reference 228 provides a reference signal and/or data that is substantially similar to the microwave signal generated by a respective probe 202.

The detuned loading signals and the reference signals and/or data are transmitted to reception power detector 224, to transmission power detector 222, and/or to subtractor 230 for use in generating a power difference signal for each comparison. A proximity measurement signal for each probe 202 is generated in a similar manner as described above with reference to Fig. 2. As such, each receiver 218 and each signal reference 228 associated with receiver 218 may be tuned to a common frequency and/or may be provided with a similar microwave signal such that a single signal processing device 200 may calculate a proximity of one or more objects using the plurality of probes 202.

In one embodiment, each probe 202 transmits identifying data along with the detuned loading signal to a respective receiver 218 for use in identifying the probe 202 from which the detuned loading signal was generated. The identifying data may be transmitted to signal reference 228, to transmission power detector 222, to subtractor 230, and/or to any other component of signal processing device 200 to enable signal processing device 200 to associate the detuned loading signal with the reference signal and/or data. As such, subtractor 230 may compare detuned loading signals from a plurality of probes 202 with a matching reference signal and/or data to calculate a power difference signal for each probe 202. Accordingly, signal processing device 200 and probes 202 facilitate generating proximity measurements for a plurality of probes 202 having one or more different microwave signal frequencies and/or characteristics using a single signal processing device 200.

In contrast to known microwave sensors, the sensor assemblies described herein include a wireless transmitter that is integrated within a microwave probe, and a wireless receiver that is integrated within a signal processing device. The wireless receivers and transmitters enable the sensor assemblies to transmit microwave signals with a lower amount of signal loss as compared to known sensors that use physical data cables. The sensor assemblies described herein each generate an electromagnetic field from a microwave signal generator integrated within each probe, and each generates a detuned loading signal based on a presence of an object within each field. The probes transmit signals representative of the detuned loading signal to the signal processing devices. The signal processing devices compare an amount of power contained in the microwave signals used to generate the electromagnetic fields with an amount of power contained within the detuned loading signals. The signal processing devices use the result of the power comparison to generate a proximity measurement. The wireless transmission of the detuned loading signals facilitates reducing signal losses during transmission, thus facilitating enabling the signal processing devices to provide more accurate and robust proximity measurements as compared to known sensors that use a different proximity measurement calculation and/or that use physical data cables.

Exemplary embodiments of a sensor assembly and methods for measuring a proximity of a machine component to a sensor are described above in detail. The methods and sensor assembly are not limited to the specific embodiments described herein, but rather, components of the sensor assembly and/or steps of the methods may be utilized independently and separately from other components and/or steps described herein. For example, the sensor assembly may also be used in combination with other measuring systems and methods, and is not limited to practice with only the power system as described herein. Rather, the exemplary embodiment can be implemented and utilized in connection with many other measurement and/or monitoring applications.

Although specific features of various embodiments of the invention may be shown in some drawings and not in others, this is for convenience only. In accordance with the ` principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A sensor assembly for use in monitoring a machine component, said sensor assembly comprising:
   a signal processing device; and
   at least one probe comprising:
      an emitter configured to generate an electromagnetic field from at least one microwave signal, wherein said emitter is detuned when a machine component is positioned within the electromagnetic field such that a loading signal is generated; and
      a transmitter coupled to said emitter, said transmitter configured to wirelessly transmit the loading signal to said signal processing device.
2. A sensor assembly in accordance with Clause 1, wherein said signal processing device calculates a difference between an amount of power contained within the at least one microwave signal and an amount of power contained within the loading signal received from said transmitter.
3. A sensor assembly in accordance with any preceding Clause, wherein said signal processing device calculates a proximity of the machine component with respect to said at least one probe.
4. A sensor assembly in accordance with any preceding Clause, wherein said at least one probe comprises a plurality of probes that each wirelessly transmit at least one loading signal to said signal processing device.
5. A sensor assembly in accordance with any preceding Clause, wherein said signal processing device comprises a plurality of receivers that each receive at least one loading signal from a respective one of said plurality of probes.
6. A sensor assembly in accordance with any preceding Clause, wherein said transmitter comprises a memory device configured to buffer data representative of the loading signal if communication between said transmitter and said signal processing device is interrupted.
7. A sensor assembly in accordance with any preceding Clause, wherein said at least one probe comprises a signal generator configured to transmit at least one microwave signal to said emitter.
8. A power system comprising:
   a machine comprising at least one component; and
   a sensor assembly positioned proximate to said at least one component, said sensor assembly comprising:
      a signal processing device; and
      at least one probe comprising an emitter and a transmitter, said emitter configured to generate an electromagnetic field from at least one microwave signal, wherein said emitter is detuned when said at least one component is positioned within the electromagnetic field such that a loading signal is generated, said transmitter coupled to said emitter and configured to wirelessly transmit the loading signal to said signal processing device.
9. A power system in accordance with any preceding Clause, wherein said signal processing device calculates a difference between an amount of power contained within the at least one microwave signal and an amount of power contained within the loading signal received from said transmitter.
10. A power system in accordance with any preceding Clause, wherein said signal processing device calculates a proximity of the machine component with respect to said at least one probe.
11. A power system in accordance with any preceding Clause, wherein said at least one probe comprises a plurality of probes that each wirelessly transmit at least one loading signal to said signal processing device.
12. A power system in accordance with any preceding Clause, wherein said signal processing device comprises a plurality of receivers that each receive at least one loading signal from a respective one of said plurality of probes.
13. A power system in accordance with any preceding Clause, wherein said transmitter comprises a memory device configured to buffer data representative of the loading signal if communication between said transmitter and said signal processing device is interrupted.
14. A power system in accordance with any preceding Clause, wherein said at least one probe comprises a signal generator configured to transmit at least one microwave signal to said emitter.
15. A method for measuring a proximity of at least one machine component, said method comprising:
   generating an electromagnetic field from at least one microwave signal;
   generating a loading signal representative of a disruption of the electromagnetic field;
   wirelessly transmitting the loading signal to a signal processing device; and
   calculating a proximity of the at least one machine component based on the loading signal received.
16. A method in accordance with any preceding Clause, further comprising calculating a difference between an amount of power contained within the at least one microwave signal and an amount of power contained within the loading signal received.
17. A method in accordance with any preceding Clause, wherein calculating a proximity of the machine component comprises calculating a proximity of the at least one machine component.
18. A method in accordance with any preceding Clause, wherein a plurality of probes are positioned proximate to the at least one machine component, said method further comprising wirelessly transmitting at least one loading signal to the signal processing device from each one of the plurality of probes.
19. A method in accordance with any preceding Clause, wherein the signal processing device includes a plurality of receivers, said method further comprising receiving a first loading signal from a first probe of the plurality of probes and a second loading signal from a second probe of the plurality of probes, wherein the first loading signal has at least one characteristic that is different from a characteristic of the second loading signal.
20. A method in accordance with any preceding Clause, further comprising buffering data representative of the loading signal if a communication to the signal processing device is interrupted.

## Claims

1. A sensor assembly (110) for use in monitoring a machine component (104), said sensor assembly comprising:
a signal processing device (200); and
at least one probe (202) comprising:
an emitter (206) configured to generate an electromagnetic field from at least one microwave signal, wherein said emitter is detuned when a machine component is positioned within the electromagnetic field such that a loading signal is generated; and
a transmitter (210) coupled to said emitter, said transmitter configured to wirelessly transmit the loading signal to said signal processing device.

2. A sensor assembly (110) in accordance with Claim 1, wherein said signal processing device (200) calculates a difference between an amount of power contained within the at least one microwave signal and an amount of power contained within the loading signal received from said transmitter (210).

3. A sensor assembly (110) in accordance with any preceding Claim, wherein said signal processing device (200) calculates a proximity of the machine component (104) with respect to said at least one probe (202).

4. A sensor assembly (110) in accordance with any preceding Claim, wherein said at least one probe (202) comprises a plurality of probes that each wirelessly transmit at least one loading signal to said signal processing device (200).

5. A sensor assembly (110) in accordance with Claim 4, wherein said signal processing device (200) comprises a plurality of receivers (218) that each receive at least one loading signal from a respective one of said plurality of probes (202).

6. A sensor assembly (110) in accordance with any preceding Claim, wherein said transmitter (210) comprises a memory device (214) configured to buffer data representative of the loading signal if communication between said transmitter and said signal processing device (200) is interrupted.

7. A sensor assembly (110) in accordance with any preceding Claim, wherein said at least one probe (202) comprises a signal generator (212) configured to transmit at least one microwave signal to said emitter (206).

8. A power system (100) comprising:
a machine (102) comprising at least one component (104); and
a sensor assembly (110) positioned proximate to said at least one component, said sensor assembly comprising:
a signal processing device (200); and
at least one probe (202) comprising an emitter (206) and a transmitter (210), said emitter configured to generate an electromagnetic field from at least one microwave signal, wherein said emitter is detuned when said at least one component is positioned within the electromagnetic field such that a loading signal is generated, said transmitter coupled to said emitter and configured to wirelessly transmit the loading signal to said signal processing device.

9. A power system (100) in accordance with Claim 8, wherein said signal processing device (200) calculates a difference between an amount of power contained within the at least one microwave signal and an amount of power contained within the loading signal received from said transmitter (210).

10. A power system (100) in accordance with Claim 8 or Claim 9, wherein said signal processing device (200) calculates a proximity of the machine component (104) with respect to said at least one probe (202).
